# DEMANDE DE BREVET EUROPEEN

(11) **EP 1 431 110 A1**
(43) Date de publication de la demande: **23.06.2004**
(21) Numéro de dépôt: 03293031.5
(22) Date de dépôt: 04.12.2003
(51) Int. Cl.: B60N 2/48

(54) **Appui-tête comprenant un système intégré de déplacement et de blocage en translation**

(30) Priorité: 20.12.2002 FR 0216392
(71) Demandeur: Centre d'Etude et de Recherche pour l'Automobile ( CERA), 51100 Reims (FR)
(72) Inventeur: Bonte, Emmanuel, 51100 Reims (FR)
(74) Mandataire: Geismar, Thierry

(57) **Abrégé**

L'invention concerne un appui-tête (1), notamment pour siège de véhicule automobile, du type comprenant une armature (2) pourvue d'au moins une tige (3a) qui s'étend suivant un axe Z, un carter (4) monté mobile en translation sur la tige (3a), et un système de déplacement et de blocage en translation du carter (4) le long de la tige (3a) intégré dans ledit carter (4), ledit système étant caractérisé en ce qu'il comprend :
- une pièce de blocage rigide (9) pourvue d'un orifice (10) destiné à recevoir la tige (3a), ladite pièce (9) étant agencée pour que, dans une position de blocage, l'axe Z' de l'orifice (10) soit incliné par rapport à l'axe Z d'un angle α suffisant pour permettre le blocage du carter (4) le long de la tige (3a), et, dans une position de translation, l'axe Z' soit incliné par rapport à l'axe Z d'un angle α' inférieur à α, pour permettre la translation libre du carter (4) le long de la tige (3a) ;
- une pièce d'actionnement (13) de ladite pièce de blocage (9);
- un dispositif de commande de la pièce d'actionnement (13);
- un logement (24) prévu dans le carter (4), au moins la pièce de blocage (9) et la pièce d'actionnement (13) étant disposés dans le logement (24).

## Description

L'invention concerne un appui-tête, notamment pour siège de véhicule automobile.

Un appui-tête pour siège de véhicule automobile doit répondre à des normes de sécurité strictes imposant qu'en position d'utilisation, celui-ci soit fermement maintenu dans la position dans laquelle il a été réglé par l'utilisateur. En outre, il est nécessaire que l'appui-tête soit pourvu d'un système de blocage destiné à empêcher sa translation dans la direction Z-, c'est-à-dire vers le bas, lorsque celle-ci n'est pas souhaitée par l'utilisateur. Une telle translation est susceptible de survenir par exemple en cas d'appui par inadvertance d'un passager arrière.

Les appuis-tête pour sièges de véhicule automobile comprennent une armature pourvue de deux tiges verticales, et un corps fixé sur l'armature, ledit corps, sur lequel est disposé le coussin d'appui, étant monté à l'extrémité supérieure des tiges dont l'autre extrémité pénètre dans le dossier du siège.

Pour le réglage en hauteur de tels appuis-tête, on connaît déjà des systèmes intégrés dans le corps de l'appui-tête. Toutefois, pour répondre au cahier des charges imposant des normes de sécurité de plus en plus strictes, il est nécessaire de prévoir des systèmes de réglage de l'appui-tête plus robustes, et ce sans en augmenter le coût.

L'invention propose donc un perfectionnement des systèmes de réglage intégrés dans le corps de l'appui-tête, ce système utilisant le principe de l'arc-boutement d'une pièce de blocage de sorte à être d'utilisation simple et de fabrication peu coûteuse. Ce système permet d'obtenir un réglage intégré, verrouillable et continu, et d'autoriser ainsi une infinité de positions de réglage.

En outre, ce système, qui utilise un nombre réduit de pièces, est de montage aisé à l'intérieur du corps de l'appui-tête.

A cet effet, l'invention concerne un appui-tête, notamment pour siège de véhicule automobile, du type comprenant une armature pourvue d'au moins une tige qui s'étend suivant un axe Z et destinée à être insérée dans la partie supérieure du dossier du siège, un carter monté mobile en translation sur la tige, sur lequel est disposé un coussin d'appui, et un système de déplacement et de blocage en translation du carter le long de la tige intégré dans ledit carter, ledit système comprenant :
- une pièce de blocage rigide pourvue d'un orifice destiné à recevoir la tige, ladite pièce étant agencée pour que, dans une position de blocage, l'axe Z' de l'orifice soit incliné par rapport à l'axe Z d'un angle α suffisant pour permettre le blocage du carter le long de la tige, et, dans une position de translation, l'axe Z' soit incliné par rapport à l'axe Z d'un angle α' inférieur à α, pour permettre la translation libre du carter le long de la tige ;
- une pièce d'actionnement de ladite pièce de blocage comprenant des moyens d'actionnement agencés pour permettre le déplacement réversible en rotation de la pièce depuis la position de blocage vers la position de translation ;
- un dispositif de commande de la pièce d'actionnement ;
- un logement prévu dans le carter, au moins la pièce de blocage et la pièce d'actionnement étant disposés dans le logement, ledit logement étant agencé pour permettre l'actionnement réversible de la pièce de blocage depuis la position de blocage vers la position de translation.

D'autres objets et avantages de l'invention apparaîtront au cours de la description qui suit, faite en référence aux dessins annexés dans lesquels :
- la figure 1 est une vue éclatée partielle d'un appui-tête montrant l'armature, le carter, et les pièces formant le système de déplacement et de blocage en translation de l'appui-tête, selon un mode de réalisation ;
- les figures 2a et 2b sont des vues en perspective de l'appui-tête de la figure 1, montrant partiellement l'intérieur de l'appui-tête dans lequel est intégré le système de déplacement et de blocage, en position de blocage ; la figure 2a montre le carter en position basse par rapport à l'armature, et la figure 2b montre le carter en position haute par rapport à l'armature ;
- la figure 3 est une vue analogue à la figure 2a, le système de déplacement et de blocage étant en position de translation ;
- la figure 4 est une vue schématique en coupe montrant le système de déplacement et de blocage en translation de l'appui-tête après intégration dans le carter, selon une variante du mode de réalisation représenté sur les figures 2 et 3, le système étant en position de blocage ;
- la figure 5 est une vue analogue à la figure 4, le système étant en position de translation.

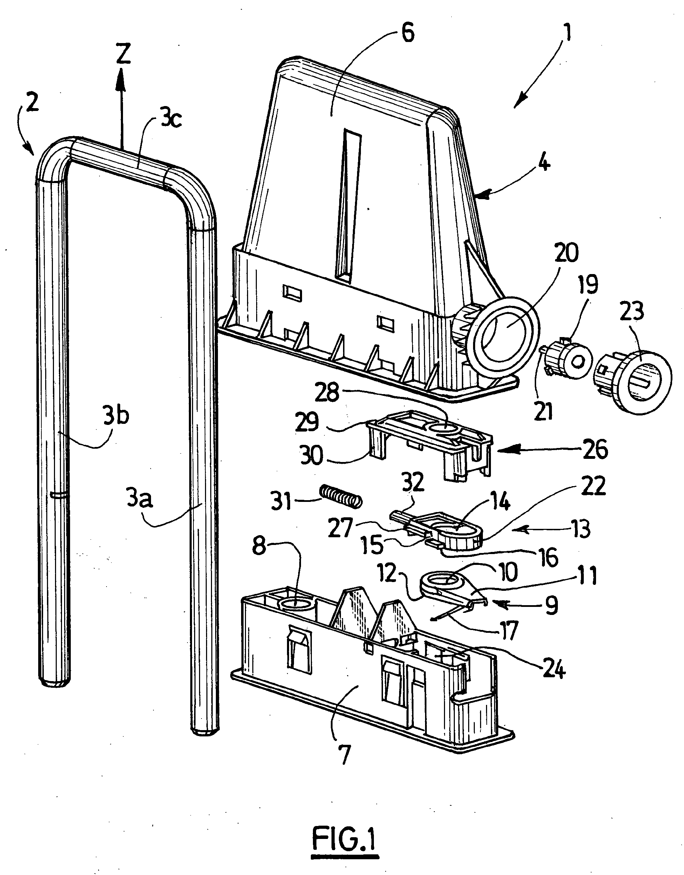

L'appui-tête 1 décrit en relation avec les figures 1 à 5 est destiné à être monté sur le dossier d'un siège de véhicule automobile. Cet appui-tête 1 comprend une armature 2 pourvue d'au moins une tige s'étendant suivant un axe Z, c'est-à-dire dans la direction verticale lorsque l'appui-tête 1 est monté sur le dossier de siège, ainsi qu'un système de déplacement et de blocage en translation.

Dans le mode de réalisation représenté, l'armature 2, classiquement formée en acier, comprend deux tiges 3a, 3b reliées entre elles par une troisième tige 3c s'étendant transversalement dans une direction perpendiculaire à l'axe Z. L'armature présente sensiblement une forme de U renversé, l'extrémité des tiges 3a, 3b opposée à la tige 3c étant destinée à être insérée dans la partie supérieure du dossier. L'armature 2 est destinée à être montée fixement sur le dossier du siège. A cet effet, des douilles de fixation sont prévues dans le dossier, lesdites douilles étant agencées pour recevoir fixement les extrémités des tiges 3a et 3b.

L'appui-tête 1 comprend également un carter 4 monté mobile en translation sur les tiges 3a et 3b. A cet effet, le carter 4 est pourvu d'orifices 5 agencés pour recevoir les tiges 3a, 3b formant l'armature. Le carter 4 est formé d'un matériau rigide, tel que du polypropylène, de sorte à former non seulement un support pour le coussin d'appui de l'appui-tête, non représenté, qui est disposé dessus, mais également une enveloppe protectrice pour le système de déplacement et de blocage en translation du carter 4 le long des tiges.

Selon la réalisation représentée, le carter 4 est formé de deux parties : un corps supérieur 6 sur lequel est monté le coussin d'appui, et un boîtier inférieur 7 destiné à être disposé à l'intérieur dudit corps 6 par emboîtement, le boîtier 7 étant agencé pour former la partie inférieure du carter 4.

Le système de déplacement et de blocage en translation est intégré dans le carter 4, et est prévu, selon le mode de réalisation représenté, au niveau de la tige 3a. La deuxième tige 3b est logée dans un orifice 8 du carter 4 prévu à cet effet.

Le système comprend une pièce de blocage rigide 9 pourvue d'un orifice 10 destiné à recevoir la tige 3a. Selon la réalisation représentée, cette pièce rigide 9, formée par exemple d'un matériau métallique tel que l'inox, est une rondelle comprenant une partie annulaire pourvue de l'orifice, une extension radiale 11, ainsi qu'une paroi 12 s'étendant perpendiculairement à la surface de la pièce de blocage 9, et autour d'une partie de ladite surface.

La pièce de blocage 9 est agencée pour que, dans une position de blocage, l'axe Z' de l'orifice 10 soit incliné par rapport à l'axe Z d'un angle α suffisant pour permettre le blocage du carter 4 le long des tiges 3a, 3b et pour que, dans une position de translation, l'axe Z' soit incliné par rapport à l'axe Z d'un angle α' inférieur à α pour permettre la translation libre du carter. Le déplacement de la pièce 9 entre ces deux positions par arc-boutement est rendu possible notamment par le caractère rigide de la pièce 9 et par la taille de l'orifice 10 destiné à recevoir la tige 3a.

Le système comprend également une pièce d'actionnement 13 de la pièce de blocage 9 comprenant des moyens d'actionnement agencés pour permettre le déplacement réversible en rotation de la pièce 9 depuis la position de blocage vers la position de translation.

Selon le mode de réalisation représenté, la pièce d'actionnement 13 est pourvue d'un orifice 14 destiné à recevoir la tige 3a, et d'une zone 15 de géométrie agencée pour recevoir la pièce de blocage 9 dans la position de blocage. L'orifice 14 est de taille suffisante pour permettre la translation de la pièce d'actionnement 13 selon un axe perpendiculaire à l'axe Z, cette translation étant nécessaire à l'actionnement de la pièce de blocage 9, comme cela sera décrit plus loin. La pièce d'actionnement 13 comprend un corps pourvu de l'orifice 14, sur l'une des parois duquel est prévue une rampe inférieure 16 formant moyen d'actionnement de la pièce de blocage 9 entre les deux positions de blocage et de translation.

Lors du montage du système à l'intérieur du carter 4, la pièce d'actionnement 13 est disposée au-dessus de la pièce de blocage 9, les orifices respectifs 10, 14 des deux pièces 9, 13 étant disposés en regard l'un de l'autre.

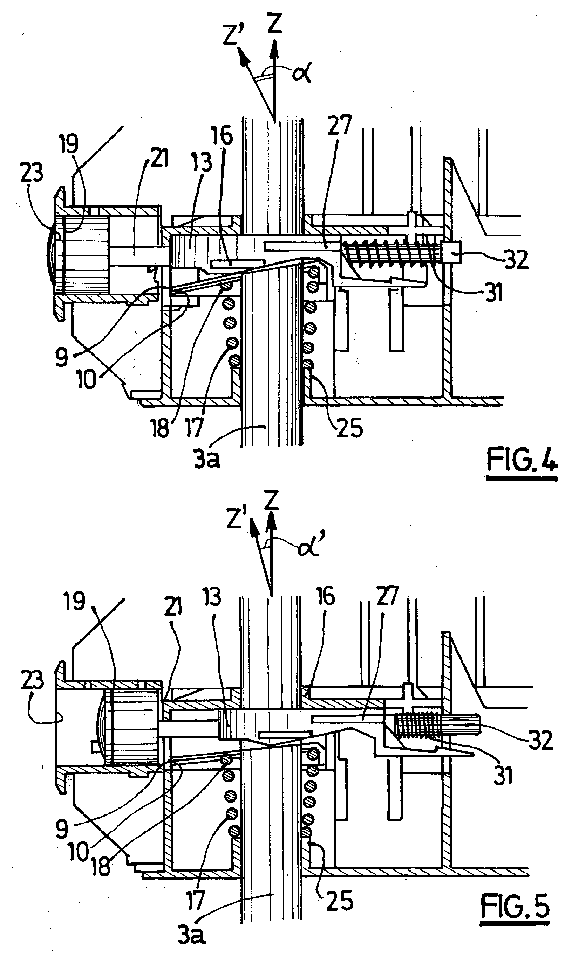

Le système comprend également un ressort de contrainte 17 du déplacement de la pièce de blocage 9 entre la position de blocage et la position de translation, ledit ressort 17 étant, dans la variante représentée sur les figures 1 à 3, formé d'une lame qui est intégrée à la pièce de blocage 9. Selon la variante représentée sur les figures 4 et 5, le ressort 17 ne fait pas partie intégrante de la pièce de blocage 9, mais y est associé par l'une de ses extrémités 18.

Le système de déplacement et de blocage en translation du carter 4 comprend en outre un dispositif de commande de la pièce d'actionnement 13. Selon la réalisation représentée, ce dispositif de commande comprend un bouton 19 actionnable manuellement par l'utilisateur depuis l'extérieur du carter 4, ledit bouton 19 étant situé sur une face latérale du carter 4 pour des raisons de commodité. A cet effet, le carter 4 comprend une ouverture latérale 20 agencée pour loger le bouton 19, ledit bouton 19 comprenant une saillie 21 venant en butée contre une face 22 de la pièce d'actionnement 13. En outre, une rondelle de finition 23 est prévue autour du bouton 19, ladite rondelle 23 étant également agencée pour pénétrer partiellement dans l'ouverture latérale 20 du carter 4.

Le système de déplacement et de blocage en translation du carter 4 comprend également un logement 24 prévu dans le carter 4, permettant de recevoir au moins la pièce de blocage 9 et la pièce d'actionnement 13, le logement 24 étant agencé pour permettre l'actionnement réversible de la pièce de blocage 9 depuis la position de blocage vers la position de translation. Le logement 24 comprend un orifice 25 destiné à recevoir la tige 3a et prévu pour être placé, lors du montage du système, en regard des orifices 10, 14 de la pièce de blocage 9 et de la pièce d'actionnement 13.

Selon la réalisation représentée, le logement 24 est formé d'une pièce de guidage 26 agencée pour guider en translation la pièce d'actionnement, et ce par coulissement d'une rampe supérieure 27 de la pièce d'actionnement 13 le long de la pièce de guidage 26. Cette pièce de guidage 26 comprend également un orifice 28 destiné à recevoir la tige 3a, et est destinée à être montée sur le boîtier inférieur 7 du carter 4 de sorte à former entre eux le logement 24, la pièce de guidage 26 étant alors disposée au-dessus de la pièce d'actionnement 13. A cet effet, la pièce de guidage 26 comprend une partie sensiblement plane 29 munie de l'orifice 28, et des pieds 30 s'étendant axialement vers la partie inférieure du carter 4, ces pieds 30 étant destinés à être insérés par clipsage dans des logements de forme complémentaire prévus dans le boîtier inférieur 7.

De la sorte, une fois monté, le carter 4 de l'appui-tête comprend, du haut vers le bas, le corps supérieur 6 sur lequel est monté le coussin d'appui, et dans lequel est logé le bouton de commande 19, puis successivement la pièce de guidage 26, la pièce d'actionnement 13, la pièce de blocage 9, ces trois pièces étant disposées à l'intérieur du boîtier inférieur 7, le ressort de contrainte 17 étant comprimé entre la face inférieure de la pièce de blocage 9 et une surface d'appui du boîtier inférieur 7. Grâce à cet agencement, le système de déplacement et de blocage en translation du carter 4 présente donc l'avantage d'être complètement intégré dans ledit carter.

Les pièces d'actionnement 13, de guidage 26 ainsi que le dispositif de commande 19, 23 sont classiquement en matériau plastique, et peuvent être obtenus par une technique de moulage par injection, ce qui présente des avantages en termes de coûts et de rapidité de fabrication.

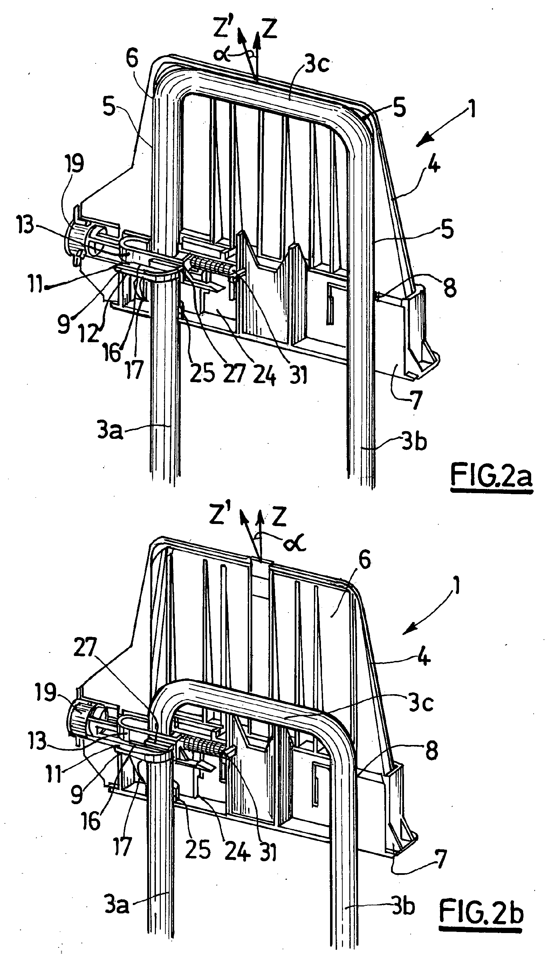

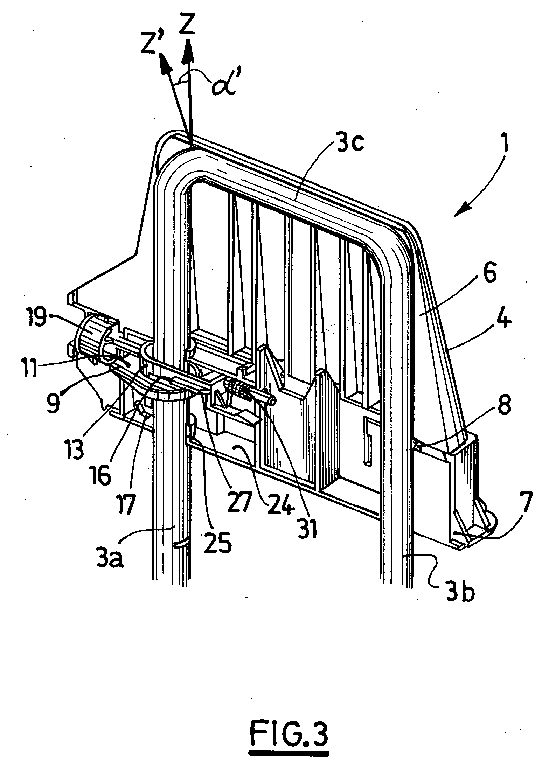

On décrit à présent le fonctionnement de l'appui-tête 1 comprenant un tel système de déplacement et de blocage en translation du carter 4 dans le mode de réalisation considéré, en relation avec les figures 2 à 5. Il est à préciser que les figures 2 et 4 représentent la pièce de blocage 9 dans sa position de blocage du carter 4, et les figures 3 et 5 représentent la pièce de blocage 9 dans la position permettant la translation dudit carter 4.

Lorsque le système est monté comme décrit plus haut, la pièce de blocage 9 est dans la position de blocage, dans laquelle elle bloque la translation du carter 4 par arc-boutement. Dans cette position, la pièce de blocage 9 est disposée dans la zone 15 de la pièce d'actionnement 13 prévue à cet effet, de sorte à être inclinée par rapport à la perpendiculaire à l'axe Z. L'axe Z' de l'orifice 10 est alors incliné d'un angle α par rapport à l'axe Z, l'angle α étant suffisant pour assurer le blocage du carter 4.

Pour permettre la libre translation du carter 4 dans la direction Z-, il est nécessaire d'actionner le bouton de commande 19 en le poussant vers l'intérieur du carter 4 (figures 3 et 5), ce qui permet également la libre translation du carter dans la direction Z+. Cette action entraîne en effet la translation de la pièce d'actionnement 13 dans la direction perpendiculaire à l'axe Z, vers l'intérieur du carter 4, la course suivie par la pièce d'actionnement 13 lors de cette translation étant imposée et limitée par la présence de la pièce de guidage 26.

En outre, au fur et à mesure de la translation de la pièce d'actionnement 13 vers l'intérieur du carter 4, un ressort de rappel 31 prévu entre la pièce d'actionnement 13 et la pièce de guidage 26, et disposé autour d'une extension 32 située sur la pièce d'actionnement 13, se comprime contre une paroi de la pièce de guidage 26.

Au cours de cette translation, la rampe inférieure 16 de la pièce d'actionnement 13 vient en appui sur une surface extérieure de la pièce de blocage 9, ce qui provoque le basculement de la pièce de blocage 9 et son déplacement par rotation jusqu'à la position de translation, ce déplacement provoquant la compression du ressort de contrainte 17. Dans cette position, la pièce de blocage 9 est dans une position sensiblement perpendiculaire à l'axe Z, et l'axe Z' de l'orifice 10 est incliné par rapport à l'axe Z d'un angle α' inférieur à α, de telle sorte que les parois de l'orifice 10 n'exercent plus un effort significatif sur la tige 3a. Ainsi, la translation du carter 4 est libre, dans les deux directions Z+ et Z-. L'utilisateur peut alors régler l'appui-tête 1 à la hauteur souhaitée.

Lorsque ce réglage est réalisé, le fait de relâcher le bouton 19 entraîne le retour de la pièce d'actionnement 13 dans sa position initiale, toujours par translation, ce retour étant assisté par le ressort de rappel 31. Cette translation a pour effet de désengager l'appui exercé par la pièce d'actionnement 13 sur la pièce de blocage 9, de sorte que celle-ci puisse revenir dans la position de blocage, sous l'action du ressort de contrainte 17.

Le système permet en outre la translation du carter 4 dans la direction Z+, c'est-à-dire vers le haut du véhicule, et ce sans actionner le bouton de commande 19. En effet, le déplacement du carter 4 vers le haut induit, par le biais du frottement entre les parois de l'orifice 10 et la tige 3a, une diminution très faible de l'angle α d'arc-boutement, ce qui permet à la pièce de blocage 9 de sortir de sa position arc-boutée. Le carter 4 peut alors être déplacé en translation librement vers le haut, dans la direction Z+, pour passer par exemple de sa position la plus basse, représentée sur la figure 2a, à sa position la plus haute représentée sur la figure 2b.

Et, lorsque le déplacement en Z+ du carter 4 est interrompu par l'utilisateur, toute pression en Z- sur le carter 4 exerce une pression du carter 4 sur la rondelle 9 en son extension radiale 11, ce qui rétablit la condition d'arc-boutement.

## Revendications

1. Appui-tête (1), notamment pour siège de véhicule automobile, du type comprenant une armature (2) pourvue d'au moins une tige (3a) qui s'étend suivant un axe Z et destinée à être insérée dans la partie supérieure du dossier du siège, un carter (4) monté mobile en translation sur la tige (3a), sur lequel est disposé un coussin d'appui, et un système de déplacement et de blocage en translation du carter (4) le long de la tige (3a) intégré dans ledit carter (4), ledit système étant **caractérisé en ce qu'**il comprend :
- une pièce de blocage rigide (9) pourvue d'un orifice (10) destiné à recevoir la tige (3a), ladite pièce (9) étant agencée pour que, dans une position de blocage, l'axe Z' de l'orifice (10) soit incliné par rapport à l'axe Z d'un angle α suffisant pour permettre le blocage du carter (4) le long de la tige (3a), et, dans une position de translation, l'axe Z' soit incliné par rapport à l'axe Z d'un angle α' inférieur à α, pour permettre la translation libre du carter (4) le long de la tige (3a) ;
- une pièce d'actionnement (13) de ladite pièce de blocage (9) comprenant des moyens d'actionnement agencés pour permettre le déplacement réversible en rotation de la pièce (9) depuis la position de blocage vers la position de translation ;
- un dispositif de commande de la pièce d'actionnement (13);
- un logement (24) prévu dans le carter (4), au moins la pièce de blocage (9) et la pièce d'actionnement (13) étant disposés dans le logement (24), ledit logement (24) étant agencé pour permettre l'actionnement réversible de la pièce de blocage (9) depuis la position de blocage vers la position de translation.

2. Appui-tête selon la revendication 1, **caractérisé en ce que** la pièce d'actionnement (13) est pourvue d'un orifice (14) destiné à recevoir la tige (3a) et d'une zone (15) de géométrie agencée pour recevoir la pièce de blocage (9) dans la position de blocage, ladite pièce d'actionnement (13) étant actionnée en translation par le dispositif de commande et comprenant une rampe inférieure (16) agencée pour, lors de la translation, venir en appui sur une surface extérieure de la pièce de blocage (9) de sorte à la déplacer vers la position de translation.

3. Appui-tête selon la revendication 2, **caractérisé en ce que** le logement (24) comprend une pièce (26) permettant le guidage en translation de la pièce d'actionnement (13), un ressort de rappel (31) disposé entre la pièce d'actionnement (13) et la pièce de guidage (26) étant agencé pour permettre le retour de la pièce d'actionnement (13) dans une position dans laquelle l'appui entre la rampe inférieure (16) de la pièce d'actionnement (13) et la surface extérieure de la pièce de blocage (9) est désengagé.

4. Appui-tête selon l'une des revendications 1 à 3, **caractérisé en ce que** le système comprend un ressort de contrainte (17) du déplacement de la pièce de blocage (9) entre la position de blocage et la position de translation, ledit ressort (17) étant comprimé entre une surface d'appui du logement (24) et la face inférieure de la pièce de blocage (9).

5. Appui-tête selon la revendication 4, **caractérisé en ce que** le ressort de contrainte (17) est formé d'une lame qui est intégrée à la pièce de blocage (9).

6. Appui-tête selon l'une des revendications 2 à 5, **caractérisé en ce que** le dispositif de commande comprend un bouton (19) actionnable manuellement depuis l'extérieur du carter (4), le carter (4) comprenant une ouverture latérale (20) agencée pour loger ledit bouton (19), ledit bouton (19) comprenant une saillie (21) venant en butée contre une face (22) de la pièce d'actionnement (13).

7. Appui-tête selon l'une des revendications 1 à 6, **caractérisé en ce que** le carter (4) comprend un corps supérieur (6) et un boîtier inférieur (7) destiné à être disposé à l'intérieur dudit corps (6), la pièce de guidage (26) étant montée sur le boîtier (7) de sorte à former entre eux le logement (24).
